# EUROPEAN PATENT SPECIFICATION

(11) **EP 0 726 404 B1**
(45) Date of publication and mention of the grant of the patent: **11.09.2002**
(21) Application number: 95300851.3
(22) Date of filing: 10.02.1995
(51) Int. Cl.: F16C 33/54

(54) **Roller bearing cage and method of forming same**
Rollenlagerkäfig und seine Herstellungsmethode
Cage pour palier à rouleaux et méthode de fabrication

(43) Date of publication of application: 14.08.1996
(73) Proprietor: THE TORRINGTON COMPANY, Torrington, Connecticut 06790 (US)
(72) Inventor: Alling, Richard L., Torrington CT 06790 (US)
(74) Representative: Feakins, Graham Allan

(56) References cited:
- DE-U- 1 811 634
- FR-A- 1 414 486
- GB-A- 911 447
- GB-A- 2 187 804
- US-A- 1 871 149
- US-A- 5 255 985

## Description

This invention relates generally to a method of forming a roller bearing cage and, more particularly, to a roller bearing cage of "sigma" configuration.

Roller bearings commonly employ separators, retainers or cages to maintain separation and alignment of the rollers. Although the terms are frequently used interchangeably, the term "cage" is often used to describe a device that retains the rollers both radially and axially. Thus, a roller bearing cage prevents rollers from moving axially or radially out of the cage, allowing the cage and rollers to be handled as a bearing subassembly.

One particular type of roller bearing cage is known as a sigma cage.

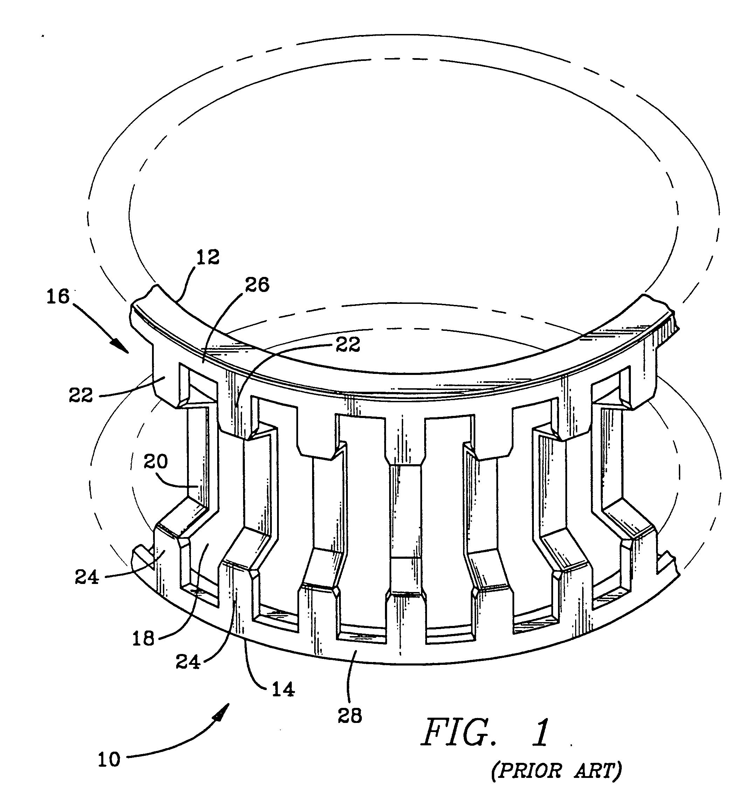

Referring firstly to Figure 1, which is an isometric view illustrating a known roller bearing sigma cage, a typical sigma cage 10 has annular end rims 12 and 14, axially spaced apart along a common axis, joined together by crossbars 16 to form slots 18 for receiving rollers, not shown. The crossbars 16 have a central portion 20 offset radially inwardly from laterally outward portions 22 and 24 such that, when viewed in longitudinal section, the end rims 12 and 14 and crossbars 16 resemble the Greek letter "sigma".

The end rims 12 and 14 extend radially as end flanges 26 and 28, respectively. The end flanges 26 and 28 provide stop surfaces which assist the slots 18 to ensure that axial movement of the rollers is restricted. Edge surfaces on the central portion 20 prevent radially inward movement of the rollers and edge surfaces of the laterally outward portions 22 and 24 prevent radially outward movement of the rollers

US-A-5 255 985 discloses a method of forming roller bearing cage in accordance with the preamble of claim 1.

In some applications, a significant axial offset is required between the roller pockets (slots) and the end flanges of the cage. Such offset materially affects the axial containment of the rollers because the end flanges no longer provide stop surfaces proximate to the slots. As a result, roller loss can occur during handling of the cage before installation or upon installation of the bearing in the housing.

According to the present invention, there is provided a method for forming a roller bearing cage, the method comprising the steps of forming a flat strip of metal such that a centre relief portion is offset with respect to two edge portions that lie within a plane, piercing centre slots across the centre relief portion to form crossbars and roller receiving slots such that a partially formed bearing cage is formed, forming the partially formed bearing cage into a circular hoop, having an axis such that the edge portions form rings at axial ends of the circular hoop, and forming abutment surfaces at the ends of each roller receiving slot such that rollers located within the respective roller receiving slots are retained in the axial direction by engagement with said abutment surfaces; characterised that, in order to form said abutment surfaces, slot end depressions are formed in the material of said two edge portions, whereby the edges of said slot end depressions form said abutment surfaces for the rollers.

For a better understanding of the invention and to show how the same may be carried into effect, reference will now be made, by way of example, to Figures 2 to 5 of the accompanying drawings, in which:-
Figure 2 is an isometric view illustrating an embodiment of the present roller bearing cage;
Figure 3 is a sectional view of two roller bearing cages of Fig. 2, as indicated by reference line 3-3, as installed in an elongate bearing housing having a cross drilled lubrication hole;
Figure 4 is a diagram illustrating outlines of multiple punches that may be used to pierce slots of the bearing cage of Figure 2; and
Figure 5 is a sectional view of a roller bearing cage illustrating a second embodiment of the present roller bearing cage.

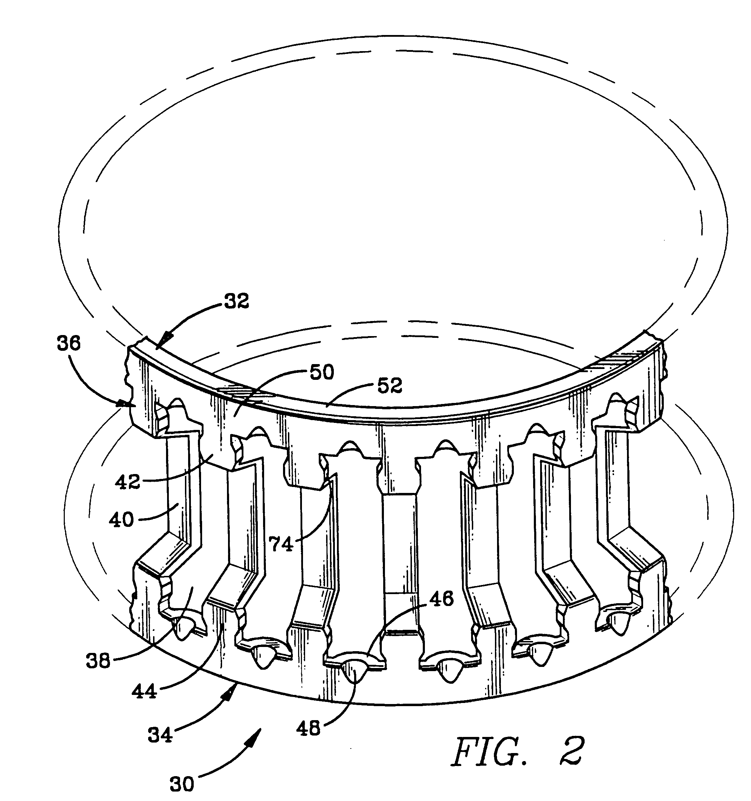

Referring now to Figures 2 to 5 of the drawings, Figure 2 illustrates a preferred embodiment of roller bearing cage 30 of the present invention having end rims 32 and 34, axially spaced apart along a common axis, joined together by crossbars 36 to form slots 38 for receiving rollers, not shown. The crossbars 36 have a central portion 40 offset radially inwardly from laterally outward portions 42 and 44. The cage 30 is considered a sigma cage because the end rims 32 and 34 and crossbars 36 suggest the Greek letter "sigma" when the cage is viewed in longitudinal section.

Unlike the roller bearing cage of Figure 1, the roller bearing cage 30 has depressed slot ends designed to abut end surfaces of bearing rollers received within the slots 38. Abutment surfaces 46 are formed by periodic depressions 48, one at each end of the roller receiving slots 38, to prevent escape of the bearing rollers, especially in the absence of close proximity bearing cage flanges. Specifically, axial movement of the bearing rollers in both axial directions is limited by engagement of the abutment surfaces 46 by the bearing rollers.

In the particular embodiment shown, the abutment surfaces 46 have a curved profile, curved with a circular arc or otherwise, along a transverse section of the bearing cage 30. The depressions 48 are dimple-like recesses having a substantially angular longitudinal section and a substantially conical configuration. However, the depressions 48 may be of various shapes, depending on the shape of tooling used to form the recesses, as described below.

The end rims 32 and 34 are annular and comprise axially extending side portions 50 and flange side portions 52 extending radially inwardly at the axially outward ends of the axially extending side portions 50. The depressions 48 are formed within the axially extending side portions 50 at locations between crossbars 36. The abutment surfaces 46 are radially offset rim portions forming ends of the slots 38. The end rims 32 and 34 and crossbars 36 are formed from a single sheet of steel or other metal and have substantially the same thickness.

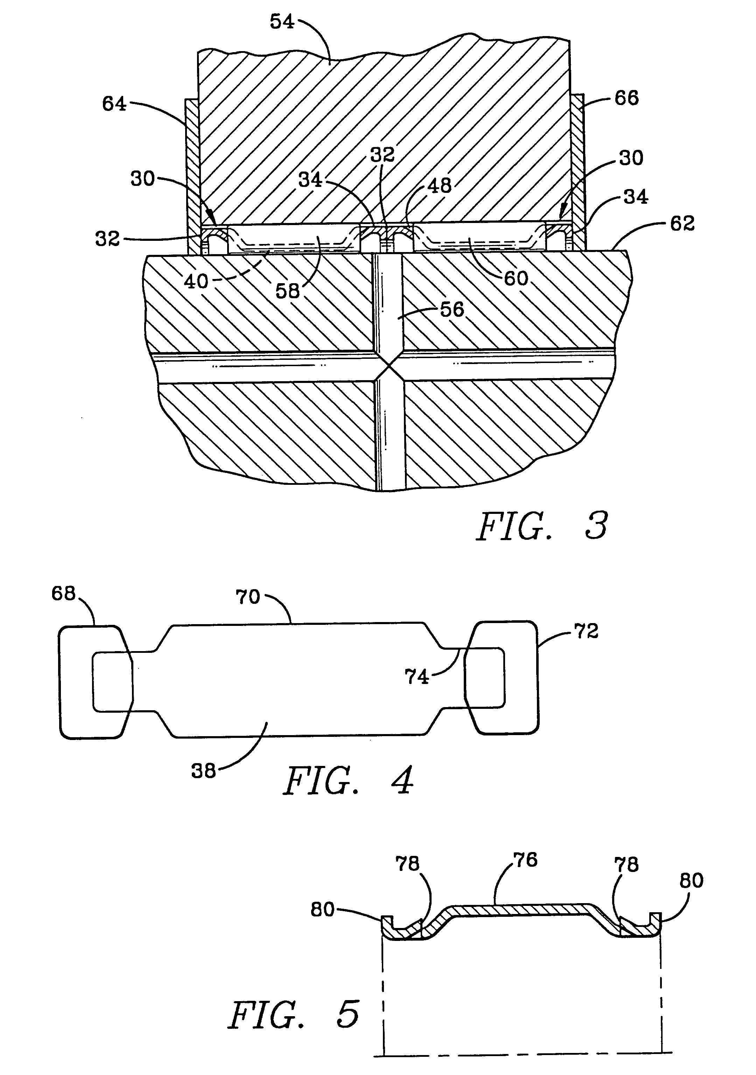

As illustrated in Figure 2, the central portions 40 of the crossbars 36 and abutment surfaces 46 are offset radially inwardly relative to the laterally outward portions 42 and 44 of the crossbars 36. However, the configuration may provide an inverted sigma bearing cage, as illustrated in Figure 5, in which central portions 76 and abutment portions 78 are offset radially outwardly. Similarly, flange portions 80 may extend radially outwardly rather than radially inwardly or may be omitted.

Figure 3 illustrates an example requiring a significant offset of the roller receiving slots from the bearing flanges. Two roller bearing cages 30, shown in longitudinal section, are installed in an elongate bearing housing 54 having a cross drilled lubrication hole 56. The depressions 48 of the end rims 32 and 34 allow two roller cage bearings to maintain proper axial location of rollers 58 and 60 without roller interference to the breakout location of the lubrication hole 56 on a load bearing shaft 62.

End washers 64 and 66 mounted on the bearing housing 54 engage outward flanges of the two roller bearing cages 30 to limit remote end axial movement of the cages. Adjacent end flanges of the roller bearing cages 30 overlie the lubrication hole 56 and abut each other to limit inward axial movement of the cages. The central portions 40 of the crossbars 36 separate the rollers 58 and 60 circumferentially and co-operate with outward portions 42 (Figure 2) to contain the rollers during handling and installation.

The preferred method of manufacturing the roller bearing cage 30 is by flat blank, wrap, and weld, using multislide techniques. Flat coil stock of uniform section is pressed to form a depressed centre relief portion between two edge portions. Pairs of slot end relief openings are pierced in the edge portions, and forming punches are seated against the laterally outward edges of the slot end relief openings, thereby forming the angled slot end depressions 48.

Centre slots are then pierced across the centre relief portion and between each pair of slot end relief openings to provide the remaining perimeter of the slots 38 such that the depressions 48 are at the ends of the slots 38. Strip edge gutting and flange forming may be used to trim and shape edges of the resulting cage blank. The cage blank is cut to a predetermined length by a block cut from the formed strip.

The completed blank is wrapped to a 360 degree circular hoop and welded such that the edge portions form rings at the axial ends of the resulting cage.

Figure 4 illustrates outlines and relative positions of multiple punches that may be used to pierce the slots 38 according to the method just described. Heavier outlines 68 and 72 represent the shape of tooling used to pierce one pair of slot end relief openings in the edge portions of the flat strip. Light outline 70 represents the shape of tooling used to pierce the centre slots across the slot end relief openings.

As shown by the positions illustrated, the opening pierced by the centre slot punch blends with the slot end relief openings, even if a slight misalignment of the punches occurs. The separate cutting of the slot end relief openings avoids distortion to the slot that might occur during pressing to form depressions 48. Overlapping of the punches results in circumferentially extending trapezoidal shaped tabs 74 (also in Figure 2) which extend into the roller receiving slots and assist in controlling radially outward movement of the rollers.

The depressions 48 may also be formed by pressing a "dimple" or recess in the edge portions of the metal strip without piercing of slot end relief openings. The full perimeter of the slots 38 would then be pierced such that a portion of the dimple remains, thereby providing the depressions 48. That method ensures a square profile (in longitudinal section) abutment surface 46 which gives maximum contact with the ends of the rollers; however, tool maintenance with that method may be more difficult.

Other variations in the method of manufacturing the cage 30 or the inverted sigma bearing cage are envisaged. The depressions 48 may be formed either before or after piercing of the centre slots. The depressions 48 and slots 38 may also be formed and pierced simultaneously or may be accomplished by a single tool. Strip edge gutting, flanging and welding steps may be added or omitted, as desired. Joining ends of the circular hoop may be by other means than welding or may be omitted.

From the above description, it will be apparent that a solution is provided to the end containment problem in conventional sigma bearing cages which results in roller loss during handling and upon bearing installation, especially when a significant offset is required between the rollers and the end flanges. Axial emergence of the bearing rollers is prevented by roller contact with the depressed slot end to maintain proper location of the rollers.

## Claims

1. A method for forming a roller bearing cage (30), the method comprising the steps of forming a flat strip of metal such that a centre relief portion (40) is offset with respect to two edge portions that lie within a plane, piercing centre slots (38) across the centre relief portion to form crossbars (36) and roller receiving slots such that a partially formed bearing cage is formed, forming the partially formed bearing cage into a circular hoop having an axis such that the edge portions form rings (32,34) at axial ends of the circular hoop, and forming abutment surfaces (46) at the ends of each roller receiving slot (38) such that rollers (58, 60) located within the respective roller receiving slots are retained in the axial direction by engagement with said abutment surfaces (46); **characterised** that, in order to form said abutment surfaces, slot end depressions (48) are formed in the material of said two edge portions (50), whereby the edges of said slot end depressions (48) form said abutment surfaces (46) for the rollers (48, 60).

2. A method according to claim 1, wherein the step of forming the depressions (48) in the two edge portions occurs before the step of piercing the centre slots (38) across the centre relief portion.

3. A method according to claim 1, wherein the step of forming the centre portion relief (40) occurs after the step of piercing the centre slots (38).

4. A method according to claim 1, 2 or 3, further comprising the step of forming a flange in each edge portion and extending perpendicular to the plane of the edge portions.

5. A method according to any one of the preceding claims, further comprising the step of cutting the partially formed bearing cage to a predetermined length before the step of forming the circular hoop.

6. A method according to any one of the preceding claims, further comprising the step of joining ends of the circular hoop to form a closed bearing cage (30) with continuous end rims (32, 34).

7. A method according to any one of the preceding claims, wherein the forming of the partially formed bearing cage into a circular hoop results in the depressed centre portion (40) and slot end depressions (48) extending radially inwardly.

8. A method according to any one of claims 1 to 6, wherein the centre relief portion (40) and the depressions (48) are both offset radially outwardly with respect to the side portions (42, 44).

9. A method according to any one of the preceding claims, wherein the steps of piercing the pairs of slot end relief openings and piercing the centre slots (38) results in at least one tab (74) extending circumferentially into the roller receiving slots.

10. A method according to any one of the preceding claims, wherein the end rims (32, 34) and crossbars (40) have substantially the same thickness.

11. A method according to any one of the preceding claims comprising forming a radially extending flange portion (80) at the axially outward ends of each edge portion (32, 34).

## Patentansprüche

1. Verfahren zum Herstellen eines Rollenlagerkäfigs (30), wobei das Verfahren die Schritte aufweist: Formen eines flachen Streifens aus Metall derart, daß ein mittlerer Vertiefungsabschnitt (40) in bezug auf zwei Randabschnitte versetzt ist, die innerhalb einer Ebene liegen, Ausstanzen mittlerer Schlitze (38) an dem mittlerenVertiefungsabschnitt zur Bildung von Querstegen (36) und Rollenaufnahmeschlitzen derart, daß ein teilweise ausgebildeter Lagerkäfig gebildet wird, Umformen des teilweise ausgebildeten Lagerkäfigs in einen kreisförmigen Ring, der eine Achse hat, derart, daß die Randabschnitte Ringe (32, 34) an axialen Enden des kreisförmigen Rings bilden, und Ausbilden von Anschlagoberflächen (46) an den Enden jedes Rollenaufnahmeschlitzes (38) derart, daß Rollen (58, 60), die innerhalb der entsprechenden Rollenaufnahmeschlitze angeordnet sind, in der axialen Richtung durch Anlage an den Anschlagoberflächen (46) gehalten sind, **dadurch gekennzeichnet, daß** zur Ausbildung der Anschlagoberflächen Eindrückungen (48) an den Schlitzenden in dem Material der beiden Randabschnitte (50) ausgebildet werden, wodurch die Ränder der Eindrückungen (48) an den Schlitzenden die Anschlagoberflächen (46) für die Rollen (48, 60) bilden.

2. Verfahren nach Anspruch 1, bei dem der Schritt des Ausbildens der Eindrückungen (48) in den beiden Randabschnitten vor dem Schritt des Ausstanzens der mittleren Schlitze (38) an dem mittleren Vertiefungsabschnitt vorgenommen wird.

3. Verfahren nach Anspruch 1, bei dem der Schritt des Ausbildens des mittleren Vertiefungsabschnitts (40) nach dem Schritt des Ausstanzens der mittleren Schlitze (38) vorgenommen wird.

4. Verfahren nach Anspruch 1, 2 oder 3, das ferner den Schritt aufweist: Ausbilden eines Flansches an jedem Randabschnitt, der sich senkrecht zu der Ebene der Randabschnitte erstreckt.

5. Verfahren nach irgendeinem der vorhergehenden Ansprüche, das ferner den Schritt aufweist: Schneiden des teilweise ausgebildeten Lagerkäfigs auf eine vorbestimmte Länge vor dem Schritt des Ausbildens des kreisförmigen Rings.

6. Verfahren nach irgendeinem der vorhergehenden Ansprüche, das ferner den Schritt aufweist: Verbinden der Enden des kreisförmigen Rings, um einen geschlossenen Lagerkäfig (30) mit kontinuierlichen Endrändern (32, 34) zu bilden.

7. Verfahren nach irgendeinem der vorhergehenden Ansprüche, bei dem das Formen des teilweise ausgebildeten Lagerkäfigs in einen kreisförmigen Ring zur Folge hat, daß sich der vertiefte, mittlere Abschnitt (40) und die Eindrückungen (48) an den Schlitzenden radial nach innen erstrecken.

8. Verfahren nach irgendeinem der Ansprüche 1 bis 6, bei dem der mittlere Vertiefungsabschnitt (40) und die Eindrückungen (38) beide radial nach außen in bezug auf die Seitenabschnitte (42, 44) versetzt sind.

9. Verfahren nach irgendeinem der vorhergehenden Ansprüche, bei dem der Schritt des Ausstanzens der Paare von Entlastungsöffnungen an den Schlitzenden und des Ausstanzens der zentralen Schlitze (38) wenigstens eine Lasche (74) zur Folge hat, die sich in Umfangsrichtung in die Rollenaufnahmeschlitze hinein erstreckt.

10. Verfahren nach irgendeinem der vorhergehenden Ansprüche, bei dem die Endränder (32, 34) und die Querstege (40) im wesentlichen die gleiche Dicke haben.

11. Verfahren nach irgendeinem der vorhergehenden Ansprüche, bei dem ein sich radial erstreckender Flanschabschnitt (80) an den axial äußeren Enden jedes Randabschnitts (32, 34) ausgebildet wird.

## Revendications

1. Procédé pour former une cage de palier à rouleaux (30), le procédé comprenant les opérations consistant à former un ruban plat de métal de telle manière qu'une partie centrale en relief (40) est décalée par rapport à deux parties de bordure qui sont situées dans un plan, à percer des fentes centrales (38) à travers la partie centrale en relief pour former des traverses (36) et des fentes de réception de rouleaux, de sorte que l'on forme une cage de palier partiellement formée, à mettre en forme la cage de palier partiellement formée en une boucle circulaire ayant un axe tel que les parties de bordure forment des bagues (32, 34) à des extrémités axiales de la boucle circulaire, et à former des surfaces de butée (46) aux extrémités de chaque fente de réception de rouleau (38), de manière que les rouleaux (58, 60) situés à l'intérieur des fentes de réception de rouleau respectives sont retenus dans la direction axiale par engagement avec lesdites surfaces de butée (46) ; **caractérisé en ce que**, afin de former lesdites surfaces de butée, on forme des dépressions (48) aux extrémités des fentes dans le matériau desdites deux parties de bordure (50), grâce à quoi les bords desdites dépressions (48) aux extrémités des fentes forment lesdites surfaces de butée (46) pour les rouleaux (58, 60).

2. Procédé selon la revendication 1, dans lequel l'opération consistant à former les dépressions (48) dans les deux parties de bordure a lieu avant l'opération consistant à percer les fentes centrales (38) à travers la partie centrale en relief.

3. Procédé selon la revendication 1, dans lequel l'opération consistant à former la partie centrale en relief (40) a lieu après l'opération consistant à percer les fentes centrales (38).

4. Procédé selon l'une des revendications 1, 2 et 3, comprenant en outre l'opération consistant à former une bride dans chaque partie de bordure, qui s'étend perpendiculairement au plan des parties de bordure.

5. Procédé selon l'une quelconque des revendications précédentes, comprenant en outre l'opération consistant à couper la cage de palier partiellement formée à une longueur prédéterminée avant l'opération consistant à former la boucle circulaire.

6. Procédé selon l'une quelconque des revendications précédentes, comprenant en outre l'étape consistant à réunir les extrémités de la boucle circulaire pour former une cage de palier fermée (30) avec des flasques terminaux continus (32, 34).

7. Procédé selon l'une quelconque des revendications précédentes, dans lequel l'opération consistant à former la cage de palier partiellement formée en une boucle circulaire a pour résultat que la partie centrale (40) est en dépression et que les dépressions (48) aux extrémités des fentes s'étendent radialement vers l'intérieur.

8. Procédé selon l'une quelconque des revendications 1 à 6, dans lequel la partie centrale en relief (40) et les dépressions (48) sont toutes deux décalées radialement vers l'extérieur par rapport aux parties latérales (42, 44).

9. Procédé selon l'une quelconque des revendications précédentes, dans lequel les opérations consistant à percer les paires d'ouvertures en dépression aux extrémités des fentes et à percer les fentes centrales (38) ont pour résultat au moins une patte (74) qui s'étend circonférentiellement dans les fentes de réception de rouleaux.

10. Procédé selon l'une quelconque des revendications précédentes, dans lequel les flasques terminaux (32, 34) et les traverses (40) ont sensiblement la même épaisseur.

11. Procédé selon l'une quelconque des revendications précédentes, comprenant l'opération consistant à former une partie de bride (80) en extension radiale aux extrémités axialement extérieures de chaque partie de bordure (32, 34).
